# EUROPEAN PATENT APPLICATION

(11) **EP 4 817 965 A1**
(43) Date of publication of application: **07.10.2026**
(21) Application number: 25167583.1
(22) Date of filing: 31.03.2025
(51) Int. Cl.: B60R 21/015

(54) **METHOD FOR ADJUSTING AT LEASTE ONE OCCUPANT SAFETY MODULE OF A MOTOR VEHICLE, DATA PROCESSING APPARATUS, COMPUTER PROGRAM, COMPUTER-READABLE STORAGE MEDIUM, AND MOTOR VEHICLE**

(71) Applicant: Volvo Car Corporation, 405 31 Göteborg (SE)
(72) Inventor: BJÖRKLUND, Magnus, 40531 Göteborg (SE); NURBO, Pernilla, 40531 Göteborg (SE); HEURLIN, Fredrik, 40531 Göteborg (SE)
(74) Representative: Kransell & Wennborg KB

(57) **Abstract**

The disclosure relates to a method for adjusting at least one occupant safety module (140) of a motor vehicle (10). The method comprises obtaining first data (D1) indicative of a seat position of a driver's seat (20) of the motor vehicle. The method also comprises obtaining, based on the obtained first data (D1), second data indicative of a size of an occupant (30) sitting on the driver's seat (20). The method further comprises obtaining, based on the obtained second data, third data indicative of at least one adjustable parameter of the at least one occupant safety module (140). Further, the method comprises causing, based on the obtained third data, adjustment of the at least one occupant safety module (140) of the motor vehicle (10). The disclosure further relates to a data processing apparatus (90), a computer program (93), a computer-readable storage medium (92), and a motor vehicle (10).

## Description

### TECHNICAL FIELD

The present disclosure relates to a method for adjusting at least one occupant safety module of a motor vehicle.

Additionally, the present disclosure is directed to a data processing apparatus, a computer program, and a computer-readable storage medium.

Furthermore, the present disclosure relates to a motor vehicle.

### BACKGROUND ART

Occupant safety features such as an airbag and seatbelt are crucial in preventing or mitigating the injuries of the vehicle occupants in case of a vehicle collision. As a result, modern motor vehicles are equipped with such features. However, said features are standardized and target to protect occupants with a variety of physical appearances with the same solution for everyone, thus lacking in individualized protection based on physical characteristics such as size, wight, stature of the individual occupants.

### SUMMARY

It is an objective of the present disclosure to further improve the safety of the occupant, specifically the driver.

The problem is at least partially solved or alleviated by the subject matter of the independent claims of the present disclosure, wherein further examples are incorporated in the dependent claims.

According to a first aspect, there is provided a method for adjusting at least one occupant safety module of a motor vehicle. The method comprises obtaining first data indicative of a seat position of a driver's seat of the motor vehicle. The method further comprises obtaining, based on the obtained first data, second data indicative of a size of an occupant sitting on the driver's seat. The method further comprises obtaining, based on the obtained second data, third data indicative of at least one adjustable parameter of the at least one occupant safety module. Moreover, the method comprises causing, based on the obtained third data, adjustment of the at least one occupant safety module of the motor vehicle.

Herein, the phrase "sitting on a seat" may interchangeably be used with the phrase "sitting in a seat", or its equivalence.

The term obtaining herein may comprise or be sensing, receiving, determining, processing, identifying, estimating, computing, and/or calculating. For instance, obtaining first data may comprise or be receiving the first data. In another example, obtaining second data and third data may comprise or be determining the second data and determining the third data, respectively.

The first data may comprise or be measurements which are measured using at least one first sensor. The at least one first sensor may comprise or be a seat displacement sensor capable of measuring a displacement along a longitudinal axis of the motor vehicle. The seat displacement sensor may be capable of measuring displacement along a vertical axis of the motor vehicle. The seat displacement sensor may comprise or be as a hall sensor. The hall sensor may measure a change in magnetic field caused by a revolution of a rotational gear that is rotationally coupled to a displacement mechanism of the driver's seat. The first data may comprise or be any values of a parameter related to a component involved in the measurements using the at least one first sensor. For instance, in the above example, any information such as gear ratio of the rotating gear may be part of the first data.

The driver's seat may be a seat around which control modules of the motor vehicle are arranged. Consequently, the driver's seat may be the closest seat to the control modules of the motor vehicle. The control modules of the motor vehicle may comprise or be any one of more of a steering wheel, a foot pedal, a driver mode control, and an engine switch.

The driver's seat may comprise a seat base, a backrest, and a headrest. The seat position of the driver's seat may refer to a position of one or more of the seat base, the backrest, and the headrest with respect to a point inside a cabin of the motor vehicle. For instance, the point may be a point on the base structure or floor of the motor vehicle. That is, the seat position may refer to a relative distance between a point on the seat base of the driver's seat and a point on the driver's seat of the motor vehicle. The seat base may be a portion of the driver's seat on which an occupant or the driver sits. Alternatively or additionally, the seat position of the driver's seat may refer to an orientation of the one or more of the seat base, the backrest, and the headrest with respect to a reference axis, e.g., the axes of the motor vehicle. For instance, the backrest may be reclined with respect to a vertical axis of the motor vehicle. Such angle may be a tilt angle and may be comprised in the seat position of the motor vehicle.

An occupant sitting on the driver's seat may be referred to as a driver of the motor vehicle.

The second data may comprise or be processed data. The second data may be any data indicative of the physical appearance, or size, of the driver or any dimensional magnitude describing such physical appearance of the driver. For instance, the second data may comprise or be a height of the driver, a hip-point of the driver, a pelvis position of the occupant, a length of the legs of the driver, and a length of the torso of the driver.

The at least one occupant safety module of the motor vehicle may comprise, or be, at least one of an airbag, a seatbelt, a seat position adjustment module, and a steering wheel position adjustment module.

The second data may comprise or be processed data. The third data may comprise or be a timing of deployment of the airbag, a deployment speed of the air bag, a deployment pressure of the airbag, a ventilation of the airbag, a deployment shape of the air bag, a deployment location of the airbag, a timing of a pre-tensioning of the seat belt, a force level of a pre-tensioning of the seat belt, a force level of a tensioning of the seat belt, and a force level retention profile, also known as load limiting profile, of the seat belt.

A deployment of the airbag may refer to a process, i.e., before, during, and/or after, of an inflation of the airbag. The airbag may be deployed by triggering an igniter, which in turn releases a gas, e.g., Nitrogen gas, into a gas container. The rate at which the gas is released may vary over time. The inflation of the airbag may be performed by using any one of 1) cold gas inflators: Pressure vessel with stored gas normally Argon or Helium; 2) hybrid inflators: an inflator containing both stored pressurized gas (normally Argon with traces of Helium) and some solid propellant that ignites and produces gas with different composition depending on propellant 3) solid propellant inflators: contain only solid propellants. The deployment speed of the airbag may refer to a rate at which the airbag inflates. The deployment speed of the airbag may be measured in a distance traveled by one end of the airbag per given time. Here, the given time may be a period between a collision detection and another subsequent time instance, e.g., an average passenger coming into contact with the airbag due to the collision. In this regard, adjusting the deployment speed of the airbag may be adjusting any parameter related to the airbag, which in turn adjusts the deployment speed. For instance, adjusting the deployment speed of the airbag may comprise or be adjusting the timing at which the igniter is triggered. In case the gas release rate, thereby the airbag inflation rate, differs over time, adjusting the timing of the ignition for the gas release may in turn adjust the deployment speed of the airbag particularly at the time instance when the passenger comes into contact with the airbag due to the collision. Alternatively or additionally, adjusting the deployment speed of the airbag may be or comprise adjusting the amount of gas entering into the airbag, specifically the gas container thereof. For instance, the airbag may comprise a gas rejection port, also known as ventilation holes, being arranged for controllably rejecting a portion of the gas released once the igniter is triggered. The gas rejection port may be controlled to release at least a portion of the gas to be rejected to the outside of the airbag, such that only a portion of the gas enters the gas container of the airbag which inflates for protecting the at least one occupant. This in turn adjusts the deployment speed of the airbag. The ventilation holes may be passive and/or hold the same size before, during, and/or after the adjustment of the at least one safety module or a vehicle collision. Ventilation may also be made active: opening the ventilation hole or changing the size of the ventilation hole by means of activation through an electrical signal to an igniter or other activation device.

A deployment shape of the airbag may refer to a form and/or volume of the fully or partially deployed airbag, preferably before the passenger comes into contact with the airbag. Adjusting the deployment shape of the airbag may be performed before, during, and/or after the airbag is inflated. For instance, a coupling module such as a string or a wire may be arranged for coupling one or more end(s) of a gas container of the airbag to a housing of the airbag. In such case, adjusting the deployment shape of the airbag may comprise adjusting the coupling module, e.g., by adjusting the tension of the string or positioning the string so as to adjust the location of the coupled one or more end(s) of the gas container.

A deployment location of the airbag may refer to a position of the airbag at any instance during the process of the inflation of the airbag. For instance, the airbag may comprise a positioning module being arranged between an opening through which the gas is released into a gas container of the airbag, and the positioning module is for positioning the gas container. Using the positioning module, the deployment location may be adjusted in any direction in a 3D space with respect to a reference position, i.e., an initial unadjusted position.

A pre-tensioning of the seat belt may refer to a process or action of tensioning, e.g., loosening or tightening, the seat belt before a collision of the motor vehicle reaches a full force of impact, thereby pulling the body of the passenger(s) closer to their seats. A timing of such pre-tensioning and/or a force level of such pre-tensioning can be adjusted, e.g., before the collision and/or by means a control signal fed to a pre-tensioner of the seat belt.

A tensioning of the seat belt may refer to a process or action of tensioning e.g., loosening or tightening, the seat belt during a collision of the motor vehicle. A force level of such tensioning can be adjusted, e.g., before the collision and/or by means a control signal fed to a tensioner of the seat belt.

A retention of the seat belt may refer to a process or action of tensioning, e.g., loosening or tightening, the seat belt after a collision of the motor vehicle. Such process may involve load limiting, where the seatbelt may spool out during a vehicle collision at a predetermined force to limit forces over the occupants chest and absorb crash energy. A force level of such retention, more specifically a force level retention profile, can be adjusted, e.g., before the collision and/or by means a control signal fed to a tensioner of the seat belt.

A longitudinal axis of the motor vehicle may be an axis parallel to the direction of travel of the motor vehicle, or simply a forward and backward direction. As used herein, a longitudinal axis (or longitudinal direction) is considered to coincide with, or be parallel to, a direction of travel of the motor vehicle. As used herein, a lateral axis (or lateral direction) of the motor vehicle is considered to be an axis perpendicular to the direction of travel of the motor vehicle, hence an axis perpendicular to the longitudinal axis. As used herein, a vertical axis (or vertical direction) of the motor vehicle is considered to be an axis orthogonal to a plane formed by the longitudinal and lateral axes.

The at least one occupant safety module of the motor vehicle may be located anywhere in the cabin of the motor vehicle and configured to improve the safety of any occupant of the motor vehicle particularly in case of a vehicle collision. The at least one occupant safety module of the motor vehicle may be located around the driver's seat and configured to improve the safety of specifically the driver particularly in case of a vehicle collision. Thus, causing an adjustment of such module may comprise applying the third data to the at least one occupant safety module, and/or controlling the at least one occupant safety module based on the third data, e.g., by determining a control signal and providing the control signal to the at least one occupant safety module.

The at least one occupant safety module of the motor vehicle may comprise or be at least one of a seat position adjustment module and a steering wheel position adjustment module. The seat position adjustment module may comprise or be a position adjustable seat, e.g., the driver's seat, an actuator for adjusting the seat position, and a control unit for controlling the actuator. The steering wheel position adjustment module may comprise or be a position adjustable steering wheel column connecting the steering wheel to the vehicle, an actuator for adjusting the steering wheel position, and a control unit for controlling the actuator. For instance, when a vehicle collision is detected, the driver's seat position adjustment module may adjust the position of the driver's seat to a safe position, e.g., either forward or backward along a longitudinal directional of the vehicle, so as to mitigate the injury to the driver. Additionally, or alternatively, when a vehicle collision is detected, the steering wheel adjustment module may adjust the position, e.g., by retreating the movable steering wheel column into the vehicle away from the driver, so as to mitigate the injury to the driver. Steering columns may absorb energy during a vehicle collision. Upon collision, as the driver moves forwards towards the steering wheel and starts loading onto the airbag, the steering column may start collapsing at a predetermined force to absorb energy and/or allow more space for the airbag and seat belt load limiters. This predetermined force of the steering column may be adaptable, i.e., the force may be determined, e.g., within certain parameters to adapt to a detected situation. The foregoing measures may be achieved by generating a control signal by a processing unit, communicating the control signal to the responsible actuator e.g., by a control unit, and actuating the responsible actuator based thereon. Further, the foregoing measures may be particularly combined with other measures such as controlling the airbags and/or seatbelts. For instance, depending on the magnitude of the impact from a vehicle collision, it may be desirable to both deploy the airbag at it's maximum rate, retreat the steering wheel column into the vehicle away from the driver, and move the seat backwards to minimize the impact to the driver. Such foregoing measures may advantageously improve the safety of the driver.

The step of causing, based on the obtained third data, adjustment of the at least one occupant safety module of the motor vehicle, may be performed before, during and/or after a vehicle collision.

A driver sitting in the driver's seat is likely to adjust the seat position for various reasons including improved visibility of the surrounding of the motor vehicle, improved reachability of the control modules of the vehicle, and/or driving comfort. Thus, the seat position of the driver's seat in particular may provide an accurate indication on the physical appearance of the driver, especially in comparison to the seat position of other occupants sitting in different seats who may not have as much incentive to adjust the seat position of their seats. Accordingly, the method according to the first aspect may advantageously achieve, among others, improving an accuracy of the estimation of the size of the driver. Such improved estimation may in turn results in improved safety measure by adjusting the at least one occupant safety module, e.g., such that the safety measures are tailored to the physical appearance of the driver. Accordingly, the method according to the first aspect may advantageously achieve, among others, improving the safety of the driver, particularly in case of a vehicle collision.

In an example, the method of the first aspect further comprises classifying, based on the obtained second data and a stored classification model, the occupant into a size class of a plurality of size classes. The obtaining of the third data is based on the classified size class.

The term classifying herein may comprise or be mapping.

The stored classification model may comprise or be a lookup table. A lookup table is generally generated by mapping input values to output values, and storing such mapped values in a data repository. The mapped values may e.g. come from previous measurements or experimental data, and what output or conclusion that were drawn based on the previous measurements or experiments. For the present disclosure, the lookup table may be generated by mapping previously collected second data to size groups.

The stored classification model may comprise or be an artificial intelligence model. The stored classification model may comprise or be an initialized model. The stored classification model may comprise or be an empirical model developed based on a collection of measured data. For instance, a group of occupants with varying body heights may be initially categorized into different groups, e.g., by their body heights. Then, the occupants may sit in the driver's seat, and adjust the position and/or orientation of the driver's seat fitting to their body. The adjusted seat position and/or orientation may be measured and recorded, which may indicate for instance the hip point of the occupant in the driver's seat. Such data may be distributed, e.g., over two dimensions spanning a vertical and longitudinal axis of the vehicle. Such distribution of data, together with the initial categorizations, may be used to define classification zones indicating different body heights of a driver. The classification zones may be stored as the stored classification model, based on which the body height of a further driver may be classified. The stored classification model may comprise a plurality of size classes, or also referred to as classification zones, which maps the second data into one class among the plurality of size classes. For instance, the stored classification model maps the hip-point and/or the pelvis position of a driver into a size class among the plurality of size classes.

The results of such mapping, or classification, provide information on appropriate safety measure, i.e. how to set at least one adjustable parameter of the at least one occupant safety module, to be taken for respective size class. Thus, the method according to the example above may advantageously achieve, among others, improving the safety of the driver, in case of a vehicle collision, particularly by adapting appropriate safety measures in respect to the size class to which a driver has been classified. Further, the method according to the example above may advantageously achieve, among others, simplifying the adjustment by bundling drivers into different groups, whereby each group is associated with particular setting(s) of at least one adjustable parameter of the at least one occupant safety module, thereby limiting the number of mutable adjustments to be stored.

In an example, the method of the first aspect further comprises training, based on the obtained classified size class, the stored classification model.

The step of training, based on the obtained classified size class, the stored classification model, may be part of machine learning process, relying on e.g., supervised machine learning, unsupervised machine learning, or semi-supervised learning.

For supervised learning, generally, the training data comprises input-output data pairs, where the input data may be features or attributes, and the output data may be ground truth data, meaning the accurate label or target values associated with the input data. Simply put, the input may comprise or be labeled data, and additionally or alternatively, the output may comprise or be labeled data. During training, the supervised learning model learns how to map input data to correct output data by minimizing the difference between its output predictions and the ground truth data. That is, the labeled input and/or output data may be used to measure the accuracy of the model and aid learning over time. Common supervised learning models are e.g. linear regression, decision trees, and neural networks.

When the classification model used is a supervised machine learning method, the step of training, based on the obtained classified size class, the stored classification model, may comprise: inputting previously collected second data and associated ground truth data for respective second data, i.e. given a certain second data, what should the correct size class be. By training the model on labeled second data, the trained model can subsequently be used to predict the correct size class when fed with unlabeled second data.

Unsupervised learning uses input data without labeled outputs. For unsupervised learning, the training data generally only comprises features or attributes, and during training the unsupervised learning model learns how to identify patterns, clusters, or associations within the data. When applied for the present disclosure, the training data would be second data, and the identified patterns can be used to determine correct size class. Common unsupervised learning methods are e.g. k-means clustering, principal component analysis (PCA), and hierarchical clustering.

Semi-supervised learning uses a combination of labeled and unlabeled data. The training data, i.e. second data for the present disclosure, comprises data of features or attributes whereof some is labeled, i.e. ground truth data, and some is unlabeled. During training, the model leverages both labeled and unlabeled data to improve learning. In semi-supervised learning the labeled data is used to guide the model how to classify the unlabeled data, and how to capture additional patterns in the data. Semi-supervised support vector machines (SVM) and semi-supervised neural networks are examples of semi-supervised learning methods.

The step of training, based on the obtained classified size class, the stored classification model, may further comprise: inputting second data; identifying anomaly in the results of the classification performed based on the input data and the stored classification model; and updating, based on the identified anomaly, the stored classification model. The second data may be labeled or unlabeled data. In case the second data is labeled input data, identifying anomaly in the results of the classification may comprise or be: obtaining accuracy of the classification model by comparing the results of the classification to the label of the second data.

Such training step in essence improves the accuracy of the classification with the increase in the data size used to train the classification model. Thus, the method according to the example above may advantageously achieve, among others, correcting the classification model with the training input data, thereby improving the accuracy of the classification resulting from the corrected classification model.

In an example, the first data is indicative of a displacement of the driver's seat along a longitudinal axis of the motor vehicle. Further in the same example, the first data is indicative of a displacement of the driver's seat along a vertical axis of the motor vehicle.

The term displacement herein may comprise or be translation or movement.

The use of the first data indicative of a displacement of the driver's seat along a longitudinal axis of the motor vehicle alone may provide information related to the lower half of the driver's body, e.g., lengths of the legs of the driver. Accordingly, such information may be incomplete and/or suboptimal for adjusting the at least one safety module of the motor vehicle. However, the use of both the first data indicative of a displacement of the driver's seat along a longitudinal axis of the motor vehicle and the first data indicative of a displacement of the driver's seat along a vertical axis of the motor vehicle, may provide an improved insight on how the at least one safety module should be adjusted. Such improvement may be particularly apparent when observing the safety of two drivers with the same body height, but with different body proportions. For instance, a first driver may have a relatively long leg and short torso in comparison to a second driver. Assuming the same collision, hence the same impact on the vehicle, the swing of the upper body of the first driver will differ from those of the second driver. In such case, the airbag deployment for two occupants should differ.

Thus, the method according to the example above may advantageously achieve, among others, improving the accuracy of the representation or estimation of the size of the driver. Use of such improved data may further improve the suitability of the adjusted at least one occupant safety module, which in turn may improve the safety of the driver.

In an example, the first data is indicative of a rotation of the driver's seat about a lateral axis of the motor vehicle.

The seat position of the driver's seat may refer to an orientation of the one or more of the seat base, also known as seat cushion, the backrest, and the headrest with respect to a reference axis, e.g., the axes of the motor vehicle. For instance, the backrest may be reclined with respect to a vertical axis of the motor vehicle. Such angle may be a tilt angle and may be comprised in the rotation of the driver's seat.

This information may provide further information on the physical appearance of the upper half of the body of the driver, i.e., above for instance hip. For instance, the recline may indicate the length of the arms of the driver, which may be taken into account for adjusting the at least one occupant safety module. Thus, the method according to the example above may advantageously achieve, among others, improving the suitability of the adjusted at least one occupant safety module, which in turn may improve the safety of the driver.

In an example, the second data is indicative of a hip-point of the occupant and/or a pelvis position of the occupant.

The hip-point of a driver may be a location where the driver's hip join rests in the driver's seat when seated.

The hip point for the driver may be a point a location of the occupant's pelvis sitting on the position and/or orientation adjusted seat.

The hip-point in particular may provide an improve indication on the size of the occupant. Further, the hip-point may be a reliable input data for a consistent classification, specifically when taking into account the difference in body proportions even among the drivers with the same body height. Thus, the method according to the example of above may advantageously achieve, among others, improving the suitability of the adjusted at least one occupant safety module, which in turn may improve the safety of the driver.

In an example, the method of the first aspect further comprises obtaining fourth data indicative of a weight of the occupant. The obtaining of the third data is further based on the fourth data.

The fourth data may comprise or be a weight measurement of the driver.

The fourth data may be measured for instance using a pressure sensor comprised in the seat base or seat cushion of the driver's seat.

There may be a correlation between the seat position of the driver (hip point position) and the size of the driver. For instance, the hip-point of a relatively heavier driver is likely to be more rearward and lower in comparison to the hip-point of a relatively lighter driver. The hip point of a shorter driver may be relatively higher and further forward. A shorter person may or likely weigh less. The hip point of a taller person may relatively be rearward and lower. A taller person may or likely weigh more than a shorter person. Thus, the method according to the example of above may advantageously achieve, among others, improving the suitability of the adjusted at least one occupant safety module, which in turn may improve the safety of the driver.

In an example, the method of the first aspect further comprises obtaining fifth data indicative of the size of the occupant. The fifth data is obtained based on at least one second sensor different from at least one first sensor configured to obtain the first data. The method further comprises determining, based on the obtained fifth data, whether the obtained second data is on a boundary of or is within a tolerance range.

The fifth data may comprise or be an image and a proximity.

The fifth data may be measurements measured using at least one second sensor. The at least one second sensor may comprise or be a two-dimensional image sensor, a three-dimensional image sensor, a proximity sensor, and a transceiver.

A process of verifying the accuracy and/or precision of first data measured using a first sensor based on second data measured using a second sensor may be referred to as a cross-sensor verification herein. The first sensor may be referred to as a sensor under test and the second sensor may be referred to as a reference sensor.

The step of determining, based on the obtained fifth data, whether the obtained second data is on a boundary of or is within a tolerance range may be part of or be verifying the obtained second data based on the obtained fifth data.

The tolerance range may be a range of values considered as accurate and/or acceptable.

The tolerance range may be set with respect to the fifth data. For instance, the tolerance range may be set around the fifth data, with the fifth data indicates a central point of the tolerance range.

Such verification improves, among others, the accuracy of the sensor under test, i.e., the first sensor in the example above. Further, the independence of the first sensor from the second sensor reduces the chances of simultaneous errors, improving the reliability of the verification process. Thus, the method according to the example above may advantageously achieve, among others, providing an indication of the accuracy of the at least one first sensor.

In an example, the method of the first aspect further comprises upon determining, based on the obtained fifth data, that the obtained second data is outside of the tolerance range, the method performs adjusting the second data based on a pre-defined setting and/or a previous occupancy history of the occupant. Additionally and/or alternatively upon determining, based on the obtained fifth data, that the obtained second data is outside of the tolerance range, the method performs causing, based on the obtained fifth data, calibration of the at least one first sensor.

The pre-defined setting may comprise an initial setting, default setting, and standardized setting.

The previous occupancy history of the occupant may comprise or be information on whether the current occupant, or the driver, has previously occupied any one of the seats of the motor vehicle. Accordingly, the method may comprise: identifying the occupant in the driver's seat; determining whether the identified occupant has previously occupied any one of the seats of the motor vehicle; and obtaining any data recorded from the previous occupancy of the driver.

The step of adjusting the second data based on a pre-defined setting and/or a previous occupancy history of the occupant may improve the accuracy of the second data by replacing the second data with the pre-defined setting and/or the previous occupancy history of the occupant, which may have a better accuracy. Thus, the method according to the example above may advantageously achieve, among others, improving the accuracy of the second data, which in turn improves the suitability of the third data for the driver improving the safety of the driver in case of vehicle collision.

In an example, the method of the first aspect further comprises obtaining sixth data indicative of measurement accuracy of at least one first sensor configured to obtain the first data. The method further comprises causing, based on the obtained sixth data, calibration of the at least one first sensor upon determining that the obtained second data is outside of a tolerance range.

The sixth data may comprise or be noise level, operational hours, and measurement counts of the at least one first sensor. These data may be indicative of the status of the at least one sensor which is reflected on the measurement accuracy of the at least one sensor. Accordingly, it is determined whether the at least one sensor should be calibrated. Thus, the method according to the example above may advantageously achieve, among others, identifying and correcting the at least one first sensor, specifically by monitoring the performance parameters of such sensor.

In an example, the at least one occupant safety module (140) comprises or is at least one of an airbag, a seat belt, a seat position adjustment module, and a steering wheel position adjustment module.

The at least one occupant safety module may comprise or be a safety module for improving the safety of a driver of the motor vehicle specifically in case of a vehicle collision. The at least one occupant safety module may be accordingly located, arranged, and/or configured in the motor vehicle.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of any one of the examples of the first aspect disclosed herein.

The data processing apparatus according to the second aspect may contribute advantageously to achieving, among others, improving accuracy of the estimation of the size of the driver. The data processing apparatus according to the second aspect may also contribute advantageously to achieving, among others, improving the safety of the driver, particularly in case of a vehicle collision.

According to a third aspect, there is provided a computer program comprising instructions which, when the program is executed by a computer, cause the computer to carry out the method of any one of the examples of the first aspect disclosed herein.

The computer program according to the third aspect may contribute advantageously to achieving, among others, improving accuracy of the estimation of the size of the driver. The computer program according to the third aspect may also contribute advantageously to achieving, among others, improving the safety of the driver, particularly in case of a vehicle collision.

According to a fourth aspect, there is provided a computer-readable storage medium comprising instructions which, when executed by a computer, cause the computer to carry out the method of any one of the examples of the first aspect disclosed herein.

The computer-readable storage medium according to the fourth aspect may contribute advantageously to achieving, among others, improving accuracy of the estimation of the size of the driver. The computer-readable storage medium according to the fourth aspect may also contribute advantageously to achieving, among others, improving the safety of the driver, particularly in case of a vehicle collision.

According to a fifth aspect, there is provided a motor vehicle comprising at least one occupant safety module and the data processing apparatus according to the second aspect disclosed herein. The at least one occupant safety module and the data processing apparatus are communicatively coupled for adjusting the at least one occupant safety module.

The motor vehicle according to the fifth aspect may contribute advantageously to achieving, among others, improving accuracy of the estimation of the size of the driver. The motor vehicle according to the fifth aspect may also contribute advantageously to achieving, among others, improving the safety of the driver, particularly in case of a vehicle collision.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a motor vehicle according to an example of the present disclosure comprising a data processing apparatus according to an example of the present disclosure for executing a method for adjusting at least one occupant safety module of the motor vehicle according to an example of the present disclosure
- Figure 2: shows a method for adjusting at least one occupant safety module of the motor vehicle according to an example of the present disclosure
- Figure 3: shows a block diagram of a occupant size classification method and adjusting the at least one occupant safety module of the motor vehicle according to an example of the present disclosure
- Figure 4: shows a first sensor being configured to obtain the first data according to an example of the present disclosure and the process of obtaining the first data according to an example of the present disclosure
- Figure 5: shows a collection of respective hip points of a plurality of occupants belonging to different size classes, and a method for classifying the plurality of occupants based on the respective hip points according to an example of the present disclosure
- Figure 6: shows a plurality of size classification groups determined based on the respective hip points of Figure 5 for classifying a size of an occupant according to an example of the present disclosure

### DETAILED DESCRIPTION

The figures are merely schematic representations and serve only to illustrate examples of the disclosure. Identical or equivalent elements are in principle provided with the same reference signs.

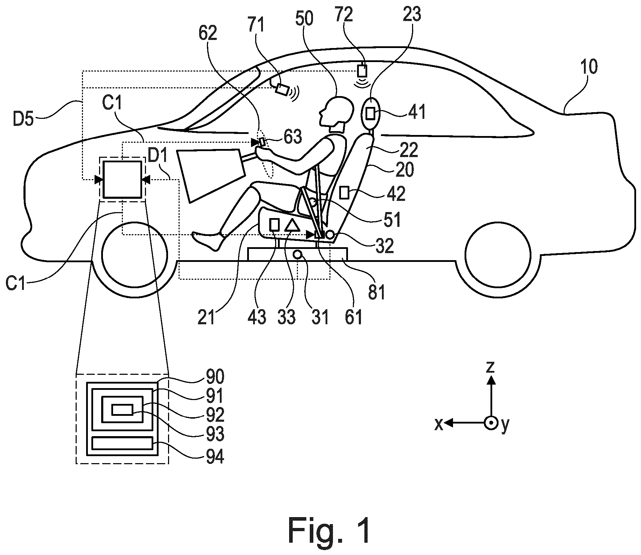

Figure 1 illustrates a side profile of a motor vehicle 10 and the components comprised therein.

Figure 1 shows a motor vehicle 10. With reference to the coordinate system of figure 1, the motor vehicle 10 is oriented according to: a longitudinal axis (or longitudinal direction) of the motor vehicle, coinciding with, or parallel to, the x-axis (x) of the coordinate system of Figure 1, where the longitudinal direction is herein also referred to a direction of travel of the motor vehicle; a lateral axis (or lateral direction) of the motor vehicle, perpendicular to the direction of travel of the motor vehicle, hence, perpendicular to the longitudinal axis, coinciding with, or parallel to, the y-axis (y) of the coordinate system of Figure 1; and a vertical axis (or vertical direction) of the motor vehicle, perpendicular to both the vertical and lateral axes and coinciding with, or is parallel to, the z-axis (z) of the coordinate system of Figure 1.

The motor vehicle 10 comprises a driver's seat 20.

The driver's seat 20 comprises a seat base 21, a backrest 22, and a headrest 23.

The driver's seat 20 comprises a seat displacement sensor 31 and a seat tilt sensor 32, where the respective sensors are examples of at least one first sensor.

The driver's seat 20 also comprises a weight sensor 33, (e.g., a pressure sensor), where data obtained based thereon is an example of the fourth data.

The seat further comprises a plurality of transceivers 41, 42, and 43, where the respective transceivers 41, 42, and 43 are examples of at least second sensor.

An occupant 30 of the vehicle is sitting on the driver's seat 20. Thus, the occupant 30 is a driver of the motor vehicle 10.

Moreover, the motor vehicle 10 comprises a driver's seatbelt 61, which is an example of at least one safety module 140.

The motor vehicle 10 further comprises a steering wheel 62.

The steering wheel 62 comprises an airbag, which is another example of the at least one safety module 140.

Furthermore, the motor vehicle 10 comprises an image sensor 71, wherein the image sensor 71 is an example of the at least one second sensor.

Furthermore, the motor vehicle 10 comprises a reference transceiver 72, wherein the reference transceiver 72 is an example of the at least one second sensor.

Further, the motor vehicle 10 comprises a data processing apparatus 90.

The data processing apparatus 90 comprises a data storage unit 91 and a data processing unit 94.

The data storage unit 91 comprises a computer-readable storage medium 92.

On the computer-readable storage medium 92, there is provided a computer program 93.

The computer program 93 and, thus, also the computer-readable storage medium 92, comprise instructions which, when executed by the data processing unit 94, or, more generally speaking, a computer, cause the computer or the data processing unit 94 to carry out a method for adjusting the at least one safety module 140 of the motor vehicle 10.

Consequently, the data storage unit 91 and the data processing unit 94 form means for carrying out the method.

The data processing apparatus 90 is communicatively coupled to the seat displacement sensor 31 and the seat tilt sensor 32. The seat displacement sensor 31 is configured to measure the displacement of the driver's seat 20 along a longitudinal axis of the motor vehicle (i.e., the x-axis in Figure 1), and the displacement of the driver's seat 20 along a vertical axis of the motor vehicle (i.e., the z-axis in Figure 1). The measurements obtained using the seat displacement sensor 31 are examples of the first data D1 and are communicated to the data processing apparatus 90. The seat tilt sensor 32 is configured to measure the rotation of the driver's seat 20 about the lateral axis of the motor vehicle (i.e., the y-axis in Figure 1). The measurements obtained using the seat tilt sensor 32 are examples of the first data D1 and are communicated to the data processing apparatus 90.

The data processing apparatus 90 is also communicatively coupled to the weight sensor 33. The weight sensor 33 is configured to measure the weight of the driver sitting on the driver's seat 20. The measurements obtained using the weight sensor 33 are examples of the fourth data and are communicated to the data processing apparatus 90.

The data processing apparatus 90 is also communicatively coupled to the image sensor 71. The image sensor 71 is configured to capture the images of an interior of a cabin of the motor vehicle 10 with at least a portion of the driver within a field of view of the image sensor 71. The images captured by the image sensor 71 are examples of the fifth data D5 and are communicated to the data processing apparatus 90.

The data processing apparatus 90 is also communicatively coupled to the reference transceiver 72. The reference transceiver 72 is communicatively coupled to the plurality of transceivers 41, 42, and 43 comprised in the seat. The reference transceiver 72 together with the plurality of transceivers 41, 42, and 43 are configured to measure the time of bidirectional communication, thereby the distance therebetween. The measurements obtained using the reference transceiver 72 are examples of the fifth data D5 and are communicated to the data processing apparatus 90.

The data processing apparatus 90 is further communicatively coupled to the airbag and the seatbelt 61. The data processing apparatus 90 determines respective values to be used to set the parameters of the airbag and the seatbelt 61. The data processing apparatus 90 further determines the control signals for controlling the airbag and the seatbelt 61. The respective values and/or the control signals are examples of the third data, and are communicated to the airbag and the seatbelt 61.

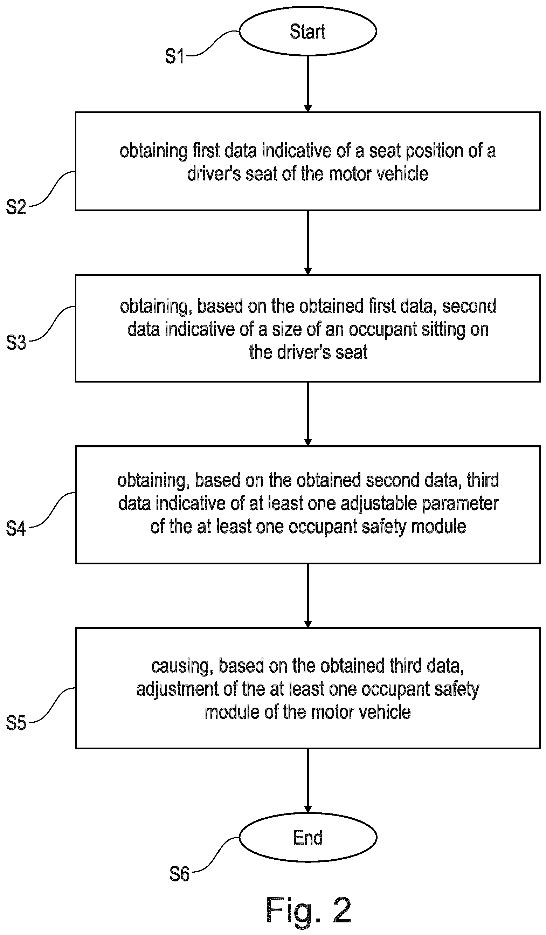

An illustration of the steps of the method executed by the data processing apparatus 90 is shown in Figure 2.

At step S1, the method starts.

At step S2, first data D1 indicative of a seat position of a driver's seat 20 of the motor vehicle 10 is obtained.

The first data D1 is obtained using the seat displacement sensor 31 and the seat tilt sensor 32.

At step S3, second data indicative of a size of an occupant 30 sitting on the driver's seat 20 is obtained based on the obtained first data D1.

The second data is obtained by processing the first data D1 using the data processing unit 94.

At step S4, third data indicative of at least one adjustable parameter of the at least one occupant 30 safety module is obtained based on the obtained second data.

The third data is obtained by processing the second using the data processing unit 94.

At step S5, adjustment of the at least one occupant 30 safety module of the motor vehicle 10 is caused based on the obtained third data.

This is achieved by controlling, based on the obtained third data, the airbag and the seatbelt 61.

At step S6, the method ends.

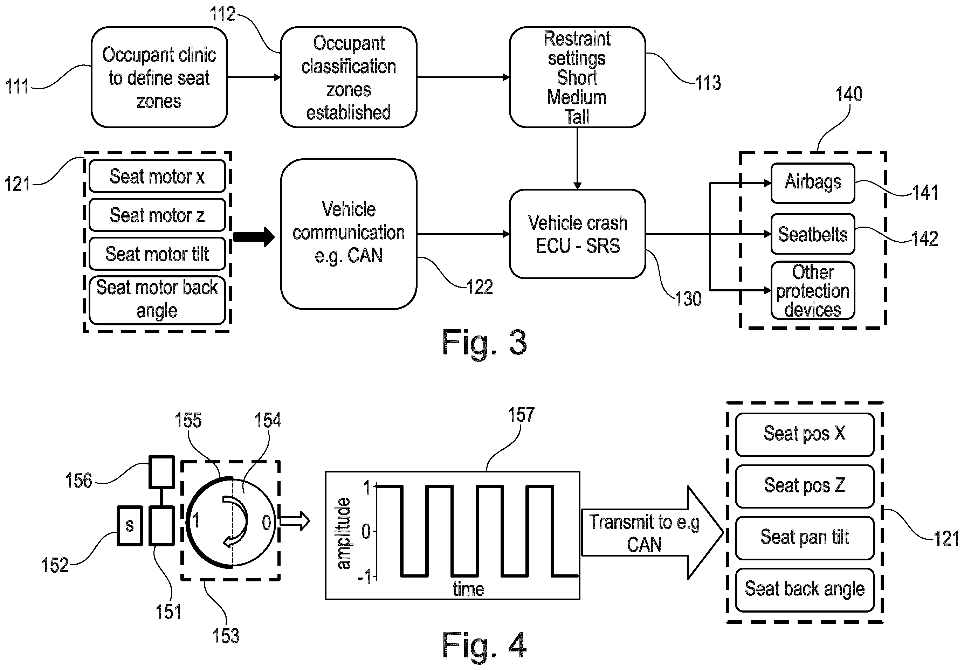

A more detailed method for adjusting the at least one occupant 30 safety module of the motor vehicle 10 is further elaborated in reference to a block diagram shown in Figure 3.

At first block 111, occupant 30 clinic is obtained in order to define seat zones. In other words, a collection of data required for defining the classes are obtained. Specifically, the height of respective occupants belonging to different height groups are obtained, and the corresponding adjusted seat position and orientation of the driver's seat 20, which has been adjusted optimally for the respective occupations, is obtained. Such data is obtained using for instance the seat displacement sensor 31 of the motor vehicle 10. Such data may be communicated to the data processing apparatus 90 of the motor vehicle 10 and/or another processing entity, e.g., a data cloud.

At second block 112, the occupant 30 classification zones are established. The classification zones are obtained by analyzing the correlation between the height of the respective occupants and the adjusted seat position and orientation of the driver's seat 20. The classification zones may be obtained by the data processing apparatus 90 of the motor vehicle 10 and/or another processing entity, e.g., a data cloud.

At third block 113, restrain settings are obtained for the established classes such as short, medium, and tall. That is, settings of and/or values, that are to be used to set the parameters of seatbelts 142 and airbags 141 comprised in the motor vehicle 10 for different classification zones, are determined and stored. The restrain settings may be obtained by the data processing apparatus 90 of the motor vehicle 10 and/or another processing entity, e.g., a data cloud. The restrain settings are stored in the data storage unit 91 of the motor vehicle 10.

At 121, a group of first data is obtained. The group of first data comprises any one of the aforementioned first data D1 as shown in reference to Figure 1. The group of first data comprises a seat displacement along a longitudinal axis (i.e., the x-axis in Figure 1) and along a vertical axis (i.e., the z-axis in Figure 1) of the motor vehicle 10, a seat rotation about a lateral axis (i.e., the y-axis in Figure 1) of the motor vehicle 10. The group of first data is obtained using the seat displacement sensor 31, the seat tilt sensor 32.

The obtained group of first data 121 is communicated to an Electronic Control Units - Supplementary Restrain System (ECU-SRS), corresponding to obtaining block 130 in Figure 3, using a vehicle communication, e.g., a Controller Area Network (CAN) of the motor vehicle 10 corresponding to communication block 122 in Figure 3. CAN is supported by a set of international standards under ISO 11898. The ECU-SRS is capable of data processing and detecting a vehicle collision, and take safety measures, e.g. preemptively. For instance, the ECU-SRS can control the at least one safety module 140 such as the airbags 141 and the seatbelts 142 before, during, and/or after a vehicle crash. In doing so, the ECU-SRS classifies the occupant 30 sitting in the driver's seat 20 based on the received group of first data 121, determines appropriate restraint settings of third block 113, and further determines the control signals for the at least one safety module 140. Then, the ECU-SRS communicates the control signals to the at least one safety module 140, thereby controlling the at least one safety module 140. The ECU-SRS is implemented by the data processing apparatus 90 of the motor vehicle 10.

The ECU-SRS also receives measurements from the weight sensor 33 of the motor vehicle (omitted in Figure 3), and processes such measurements, together with the group of first data, appropriate restraint settings of third block 113, and further determines the control signals for the at least one safety module 140.

A process of obtaining the group of first data 121 is further elaborated in reference to Figure 4.

A hall sensor 151 is placed between a permanent magnet 152 and seat displacement module 153, or a seat motor, comprising a rotating gear 154. The rotating gear 154 of the seat motor is rotationally coupled to a seat displacement base rail 81 of the driver's seat 20, thereby translating a rotational movement to a horizontal movement along the longitudinal axis (i.e., the x-axis in Figure 1) of the motor vehicle 10. That is, rotating the rotating gear 154 displaces the driver's seat 20 either forward or backward. A first half of the circumference 155 of the rotating gear 154 comprises a material that is relatively more magnetic than a second half of the circumference of the rotating gear 154, such that the hall sensor 151 senses the difference in the magnetic field between a first half of a full revolution and a second half of the full revolution of the rotating gear 154. The difference in the magnetic fields is measured using an instrumentation module 156 communicatively coupled to the hall sensor 151. The measured signal is high, or 1, during the first half of the revolution, and is low, or -1, during the second half of the revolution, resulting in a square wave with a 50% duty cycle. Such measurement, together with further data relating to the rotating gear 154 such as the gear ratio, is used to obtain the seat displacement, thereby the seat position, of the driver's seat 20 along the longitudinal direction (i.e., the x-direction in Figure 1) of the motor vehicle 10.

The same hall sensor 151 is implemented to measure the seat position along the vertical direction (i.e., the z-direction in Figure 1) of the motor vehicle 10. In this case, the rotating gear 154 is rotationally coupled to a translation mechanism that is responsible for translating the rotational movement of the rotating gear 154 to a vertical movement along the vertical axis (i.e., the z-axis in Figure 1) of the motor vehicle 10.

Similarly, the same hall sensor 151 is implemented to measure the tilt angle of the backrest 22 of the driver's position. In this case, the rotating gear 154 is rotationally coupled to a rotation mechanism that is responsible for translating the rotational movement of the rotating gear 154 to a rotational movement of the driver's seat 20 about the lateral axis (i.e., the y-axis in Figure 1) of the motor vehicle 10.

The accuracy and precision of the measurements obtained using the seat displacement sensor 31 and the seat tilt sensor 32 are verified using the image sensor 71 of the motor vehicle 10. The image sensor 71 is located at the upper center of a front windshield of the motor vehicle 10 and captures 2-dimensional (2D) images or 3-dimensional (3D) spatial images of an interior of the vehicle with the driver within the field of view. The depth information which is inherently available from a 3D spatial image indicates the seat position along the longitudinal direction (i.e., the x-direction in Figure 1) as well as the vertical direction (i.e., the z-direction in Figure 1) of the motor vehicle 10. Such depth information is not inherently available from a 2D image, but is derivable for instance using monocular cues and machine learning models. The depth information, together with features of the driver extracted based on the images, is used to estimate the seat position, which in turn are used to verify the accuracy and precision of the seat displacement sensor 31 and seat tilt sensor 32.

Transceivers 41, 42, 43, and 72 of the motor vehicle 10 also aid the verification of the accuracy and precision of the measurements obtained using the seat displacement sensor 31 and the seat tilt sensor 32. The reference transceiver 72 fastened to the center of the ceiling of the motor vehicle 10 bidirectionally communicates with a first transceiver 41 embedded in the headrest 23, a second transceiver 42 embedded in the backrest 22, and a third transceiver 43 embedded in the base of the seat. Specifically, the reference transceiver 72 sends a signal to the first, second, and third transceivers 41, 42, and 43, where the first, second, and third transceivers 41, 42, and 43 respond with an acknowledgement. The total-trip time of such communication is measured to derive the distance between two communicating transceivers 41, 42, 43, and 72. Accordingly, the seat position of the driver's seat 20 is estimated. Such information is used to verify the accuracy and precision of the measurements obtained using the seat displacement sensor 31 and the seat tilt sensor 32.

The hip-point 51 of the driver can be also estimated based on the estimated seat position as described above Such estimated hip-point 51 of the driver can then be to verify the accuracy of the hip-point 51 determined based on the measurements from the seat displacement sensor 31 and the seat tilt sensor 32.

The cross-sensor verification process, in essence, involves comparing the signals obtained through different sets of sensors. In this non-limiting case, the image sensor 71s and the transceivers 41, 42, and 43 are considered as reference sensors providing reference measurements, and the seat displacement sensor 31 and the seat tilt sensor 32 are considered as the sensors under test providing test measurements. A tolerance range is set with respect to the reference measurements, and the test measurements are compared thereto. In case the test measurements are either on the boundaries of the tolerance range or within the boundaries of the tolerance range, the test measurements are considered verified indicating that the sensors under test are correctly calibrated. On the other hand, in case at least a portion of the test measurements are determined to be outside of the boundaries of the tolerance range, the test measurements are considered unverified indicating that the test measurements may not be reliable and may require a further calibration.

Another way to determine whether a sensor under test should be calibrated is to observe a performance parameter of the sensor. In this non-limiting case, the sensors under test are the seat displacement sensor 31 and the seat tilt sensor 32. The monitored parameters of such sensors are noise level, operational hours, measurement counts, and so forth. The test measurements of such monitored parameters are examples of sixth data, and are evaluated with respect to a tolerance range defined around the respective reference values. In case the test measurements are either on the boundaries of the tolerance range or within the boundaries of the tolerance range, the test measurements are considered verified indicating that the sensors under test are correctly calibrated. On the other hand, in case at least a portion of the test measurements are determined to be outside of the boundaries of the tolerance range, the test measurements are considered unverified indicating that the test measurements may not be reliable and may require a further calibration.

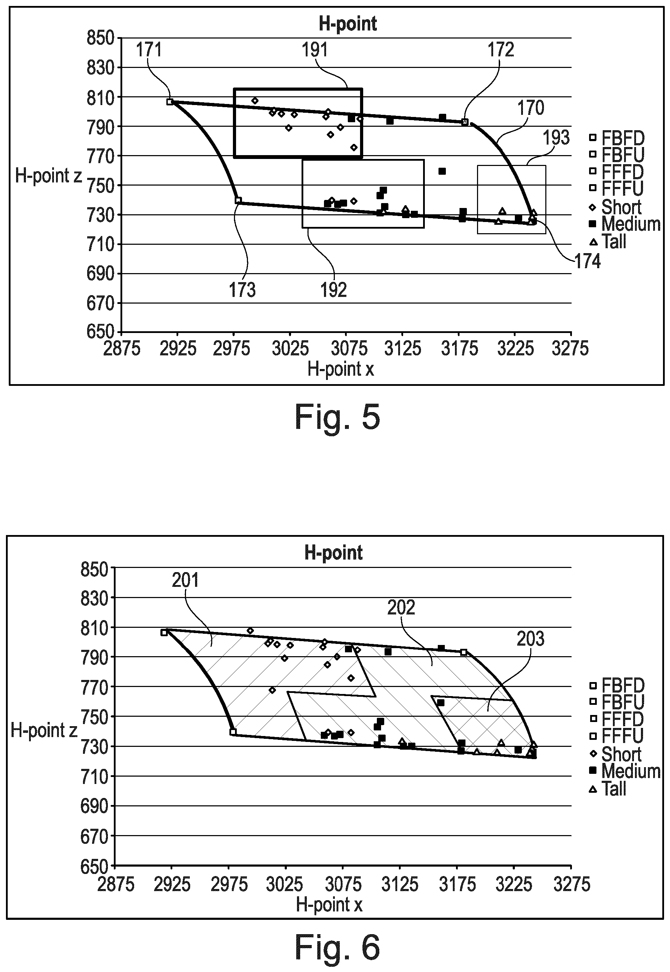

A process of forming a database for classification and defining the classification zones, as shown in first and second blocks 111 and 112 of Figure 3, is further elaborated in reference to Figure 5.

In order to form a database for classification, a collection of data of numerous occupants are gathered. Specifically, the height of individual occupants is recorded, and accordingly the respective occupants are initially grouped into a category. Then, the seat position and the orientation of the driver's seat 20 that has been adjusted to the individual occupants is recorded. Accordingly, the hip-point of the individual occupants are determined, and plotted as shown in Figure 5. The y-axis and x-axis of the graph denote the hip-point of individual occupant along the vertical axis (i.e., the z-axis in Figure 1) and longitudinal axis (i.e., the x-axis in Figure 1) of the motor vehicle 10, respectively.

The hip-point of interest is defined by four boundary points 171, 172, 173, and 174. A first, second, third, and fourth boundary points 171, 172, 173, and 174 respectively indicate a forward and upward sitting position, a backward and upward sitting position, a forward and downward sitting position, and a backward and downward sitting position, respectively. The boundary of hip-point of interest 170 is defined by a line running through all of the four boundary points 171, 172, 173, and 174. The classification zones are defined by analyzing the distribution of the data points on the graph within the boundary 170.

Occupants with different body heights are likely to adjust the seat position differently. For instance, a relatively shorter occupant is more likely to adjust the driver's seat 20 position higher for an improved visibility and more forward for an improved reachability to the controls of the motor vehicle 10 such as foot pedals, in comparison to a taller occupant. Thus, the resulting hip-points derived from the seat position of the driver's seat 20 are distributed over the x-axis and y-axis of the graph. However, such distribution may also be caused by the occupants with similar or same heights, due to different body proportions. For instance, a first occupant with a relatively long legs and short torso is likely to sit backward and higher, whereas a second occupant with a comparable height as the first occupant but having comparably shorter legs and longer torso may sit more forward and lower in comparison to the first occupant. Thus, the distribution of the hip-points is considered for determining the classification zones.

As evident from Figure 5, the occupants that are initially grouped as being short-sized are more likely to sit relatively forward and higher in comparison to other occupants that are initially grouped as being medium-sized and tall-sized. Thus, a first distribution group 191 is defined around the points with the highest density of hip-points of the occupants that are initially grouped as being short-sized. Similarly, the hip-points of the occupants that are initially grouped as being medium-sized are most densely populated around the average point of the third and fourth boundary points 173, and 174 along the longitudinal direction (i.e., the x-direction in Figure 1) of the motor vehicle 10 and the third boundary point 173 along the vertical direction (i.e., the z-direction in Figure 1) of the motor vehicle 10, although some hip-points are also found around the second boundary point 172. Thus, a second distribution group 192 is defined to cover such areas. Similarly, it is observed that the hip-points of the occupants that are initially categorized as being tall-sized are largely concentrated around the fourth boundary point 174, indicating that they adjusted the seat position relatively backward and lower, in comparison to the occupants that are initially categorized being smaller than them. Accordingly, a third distribution group 193 is defined to cover such hip-points as shown in Figure 6.

Figure 6 illustrates three classification zones, namely a short-sized classification zone 201, a medium sized classification zone 202, and a tall-sized classification zone 202, defined based on the collection of data of Figure 5. The short-sized classification zone 201 is defined based on the first distribution group 191, the medium-sized classification zone 202 is defined based on the second distribution group 192, the tall-sized classification zone 203 is defined based on the third distribution group 193. The defined classification zones 201, 202, and 203 are used to classify the occupant 30 sitting on the driver's seat 20 of the motor vehicle 10, according to the method as described in reference to Figure 3.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: Motor vehicle
- 20: Driver's seat
- 21: Seat base
- 22: Backrest
- 23: Headrest
- 30: Occupant
- 31: Seat displacement sensor
- 32: Seat tilt sensor
- 33: Weight sensor
- 41: First transceiver
- 42: Second transceiver
- 43: Third transceiver
- 50: Occupant
- 51: Hip-point
- 61: Seatbelt
- 62: Steering wheel
- 63: Airbag
- 71: Image sensor
- 72: Reference transceiver
- 81: Seat displacement base rail
- 90: Data processing apparatus
- 91: Data storage unit
- 92: Computer-readable storage medium
- 93: Computer program
- 94: Data processing unit
- C1: Control signal
- D1: First data
- D5: Fifth data
- S1: First step
- S2: Second step
- S3: Third step
- S4: Fourth step
- S5: Fifth step
- S6: Sixth step
- 111: First block
- 112: Second block
- 113: Third block
- 121: A group of First data
- 122: Communication block
- 130: Obtaining block
- 140: At least one safety module
- 141: Airbags
- 142: Seatbelts
- 151: Hall sensor
- 152: Permanent magnet
- 153: Seat displacement module
- 154: Rotating gear
- 155: First half circumference
- 156: Instrumentation module
- 157: Hall sensor measurement
- 170: Boundary of hip-point of interest
- 171: First boundary point
- 172: Second boundary point
- 173: Third boundary point
- 174: Fourth boundary point
- 191: First distribution group
- 192: Second distribution group
- 193: Third distribution group
- 201: Short-sized classification zone
- 202: medium-sized classification zone
- 203: Tall-sized classification zone

## Claims

1. A method for adjusting at least one occupant safety module (140) of a motor vehicle (10), the method comprising:
obtaining first data (D1) indicative of a seat position of a driver's seat (20) of the motor vehicle (10);
obtaining, based on the obtained first data (D1), second data indicative of a size of an occupant (30) sitting on the driver's seat (20);
obtaining, based on the obtained second data, third data indicative of at least one adjustable parameter of the at least one occupant safety module (140); and
causing, based on the obtained third data, adjustment of the at least one occupant safety module (140) of the motor vehicle (10).

2. The method of claim 1, further comprising:
classifying, based on the obtained second data and a stored classification model, the occupant (30) into a size class of a plurality of size classes;
wherein the obtaining of the third data is further based on the classified size class.

3. The method of claim 2, further comprising:
training, based on the obtained classified size class, the stored classification model.

4. The method of any one of the preceding claims, wherein the first data (D1) is indicative of a displacement of the driver's seat (20) along a longitudinal axis of the motor vehicle (10), and a displacement of the driver's seat (20) along a vertical axis of the motor vehicle (10).

5. The method of any one of the preceding claims, wherein the first data (D1) is indicative of a rotation of the driver's seat (20) about a lateral axis of the motor vehicle (10).

6. The method of any one of the preceding claims, wherein the second data is indicative of a hip-point (51) of the occupant (30) and/or a pelvis position of the occupant (30).

7. The method of any one of the preceding claims, further comprising:
obtaining fourth data indicative of a weight of the occupant (30);
wherein the obtaining of the third data is further based on the fourth data.

8. The method of any one of the preceding claims, further comprising:
obtaining fifth data (D5) indicative of the size of the occupant (30),
wherein the fifth data (D5) is obtained based on at least one second sensor different from at least one first sensor configured to obtain the first data (D1); and
determining, based on the obtained fifth data (D5), whether the obtained second data is on a boundary of or is within a tolerance range.

9. The method of claim 8, further comprising:
upon determining, based on the obtained fifth data (D5), that the obtained second data is outside of the tolerance range, performing:
adjusting the second data based on a pre-defined setting and/or a previous occupancy history of the occupant (30); and/or
causing, based on the obtained fifth data (D5), calibration of the at least one first sensor.

10. The method of any one of the preceding claims, further comprising:
obtaining sixth data indicative of measurement accuracy of at least one first sensor configured to obtain the first data (D1); and
causing, based on the obtained sixth data, calibration of the at least one first sensor upon determining that the obtained second data is outside of a tolerance range.

11. The method of any one of the preceding claims, wherein the at least one occupant safety module (140) comprises or is at least one of an airbag (141), a seat belt (142), a seat position adjustment module, and a steering wheel position adjustment module.

12. A data processing apparatus (90) comprising means for carrying out the method of any one of the preceding claims.

13. A computer program (93) comprising instructions which, when the program (93) is executed by a computer, cause the computer to carry out the method of claims 1 to 11.

14. A computer-readable storage medium (92) comprising instructions which, when executed by a computer, cause the computer to carry out the method of claims 1 to 11.

15. A motor vehicle (10) comprising at least one occupant safety module (140) and the data processing apparatus (90) according to claim 12, wherein the at least one occupant safety module (140) and the data processing apparatus are communicatively coupled for adjusting the at least one occupant safety module (140).
